# EUROPÄISCHE PATENTSCHRIFT

(11) **EP 2 129 604 B1**
(45) Veröffentlichungstag und Bekanntmachung des Hinweises auf die Patenterteilung: **11.07.2012**
(21) Anmeldenummer: 08735718.2
(22) Anmeldetag: 03.04.2008
(51) Int. Cl.: B65G 67/24, B65G 65/32, B65G 65/30, B65G 69/06

(54) **ABDECKUNG UND VERFAHREN ZUM BETREIBEN EINER ABDECKUNG**
COVER, AND METHOD FOR THE OPERATION OF A COVER
RECOUVREMENT ET PROCEDE PERMETTANT L'EXPLOITATION D'UN RECOUVREMENT

(30) Priorität: 03.04.2007 DE 102007016349; 22.05.2007 DE 102007024016
(43) Veröffentlichungstag der Anmeldung: 09.12.2009
(73) Patentinhaber: Geisenheiner, Andreas, 69198 Schriesheim (DE)
(72) Erfinder: Geisenheiner, Andreas, 69198 Schriesheim (DE)
(74) Vertreter: Bradl, Joachim
(86) Internationale Anmeldenummer: PCT/EP2008/053969
(87) Internationale Veröffentlichungsnummer: WO 2008/119828

(56) Entgegenhaltungen:
- DE-A1- 2 525 703
- DE-A1- 3 217 542
- US-A- 1 676 307
- US-A- 5 205 696
- US-A- 5 544 686

## Beschreibung

Die vorliegende Erfindung betrifft eine Abdeckung, insbesondere eine Grubenabdeckung. Des Weiteren betrifft die vorliegende Erfindung ein Verfahren zum Betreiben einer Abdeckung.

Abdeckungen der eingangs genannten Art werden beispielsweise in Aufnahme-Gossen der holzverarbeitenden Industrie, beispielsweise in Papier- und Zellstoffwerken eingesetzt, wo Schüttgut in Form von Holzhackschnitzeln in großen Mengen angeliefert wird.

Bei der Entladung von Schüttgut von Transportern, insbesondere von Holzhackschnitzel-Transportern (LKW und/oder Waggon) werden pro Zeiteinheit erhebliche Mengen von Schüttgut ausgeschoben. Das Schüttgut ist zügig in eine Grube bzw. in eine tiefliegende Aufnahme-Gosse zu führen, ohne dass eine Absturz- oder Verletzungs- bzw. Quetschgefahr für das Entladepersonal besteht. So kann beispielsweise bei einem LKW mit einem Schubboden innerhalb kürzester Zeit 90 m³ Schüttgut abgeladen und somit auf die Abdeckung gegeben werden.

Auf Grund von Brückenbildung des Schüttguts kann das Schüttgut auf einer statisch angeordneten gitterförmigen Abdeckung verbleiben und tritt daher nicht durch das Gitter hindurch. Ein solcher Schüttguthaufen ist dann beispielsweise mit einem Radlader oder einem anderen Hilfsmittel relativ zu dem statisch angeordneten Abdeckgitter zu bewegen, damit das Schüttgut durch das Gitter hindurchtritt. Dies ist zeitaufwendig, kostenintensiv und das Gitter kann hierdurch verformt bzw. beschädigt werden.

Falls man das Gitter grobmaschiger ausgestaltet, ist das Gitter weder befahrbar noch begehbar. Zur Vermeidung einer Unfallgefahr wird ein solches Gitter mit einer großflächigen Abdeckplatte abgedeckt. Auch dies ist teuer und erfordert darüber hinaus einen ganz erheblichen Platzbedarf für die Abdeckplatte, welche in horizontaler Richtung über das Gitter bewegt bzw. von dem Gitter wegbewegt werden muss.

Es existieren Lösungen, bei welchen die Gruben keine gitterförmige Abdeckung aufweisen, also lediglich eine Grube bzw. ein Loch vorliegt. Hierbei sind seitliche Absperrungen vorgesehen, welche zu öffnen bzw. zu entfernen sind, bevor ein LKW oder ein Bahnwagon entladen werden kann. Falls jedoch der LKW an der Grube zum Entladen positioniert und die Absperrung entfernt bzw. abgesenkt ist, ist es einem Bediener nicht mehr möglich, die Heckklappe des LKWs zu öffnen, um den Abladevorgang einzuleiten, da der Bediener nicht mehr hinter dem LKW (d.h. auf einer nicht vorhandenen Grubenabdeckung) gehen kann. Es ist allenfalls möglich, die Heckklappe des LKWs dann zu öffnen, wenn der LKW noch einen ausreichenden Abstand zur Grube aufweist. Hierbei kann allerdings schon Schüttgut von der Ladefläche des LKWs abfallen, was ein noch erforderliches Positionieren bzw. Rangieren des LKWs an der Grube zum effektiveren Abladen des Schüttguts unmöglich machen kann. Auch besteht bei dieser Lösung die Gefahr, dass der LKW, ein Radlader, ein Fahrzeug und/oder ein Bediener in die Grube fallen kann, was aus Sicherheitsgründen in jedem Fall zu vermeiden ist.

Insbesondere in der Papier- und Zellstoffindustrie sind Annahmestellen für anzuliefernde Holzhackschnitzel derart ausgebildet, dass die Aufnahme-Gossen mit Gitter- und Schwingrosten oder Barrieren versehen sind. Diese erfüllen die im Folgenden aufgelisteten Anforderungen nur teilweise. Somit besteht ein Verbesserungsbedarf. Die Anforderungen an eine verbesserte Abdeckung sind insbesondere:
- unterschiedliche LKW-Typen, Bahnwaggons und/oder Container sollen entladen werden können,
- eine flexible und freie Andockung mit Überquerung durch LKW und Radlader soll möglich sein,
- es soll keine Absturzgefahr für ein Fahrzeug, LKW, LKW-Fahrer, Anlagenbediener und/oder Qualitätskontrolleur bestehen,
- es soll Trittsicherheit für das Öffnen der Heck- bzw. Seitenklappe von LKW und für die Qualitätsprobenahme gegeben sein,
- die Abdeckung soll keine Teile aufweisen, welche kritische Verletzungsgefahren beinhalten,
- die Abdeckung soll keine hervorstehenden Kanten aufweisen,
- es soll ein stetiger und hoher Schüttgutdurchsatz möglich sein,
- die Abdeckung soll eine robuste und reparaturfreundliche Konstruktion aufweisen und
- eine modulare Bauweise zwecks Parallelanordnung mehrerer Abdeckungen soll möglich sein.

Die US 1 676 307 zeigt eine Abdeckung nach dem Oberbegriff des Anspruchs 1.

Der vorliegenden Erfindung liegt daher die Aufgabe zugrunde, eine Abdeckung und ein Verfahren zum Betreiben einer Abdeckung anzugeben und weiterzubilden, welche zumindest ein oben aufgeführtes Problem zu lösen vermag.

Die erfindungsgemäße Abdeckung der eingangs genannten Art löst die voranstehende Aufgabe durch die Merkmale des Patentanspruchs 1. Danach weist die erfindungsgemäße Abdeckung bewegbare Elemente, mindestens einen Randbereich und eine Bewegungseinheit auf. Die Elemente erstrecken sich zumindest bereichsweise über den abzudeckenden Raum und sind im Wesentlichen parallel zueinander angeordnet. Die Elemente sind jeweils dreh- und/oder schwenkbar relativ zum Randbereich gelagert und sind von der Bewegungseinheit bewegbar. Die Elemente sind derart dimensioniert und relativ zueinander angeordnet, dass die Abdeckung bzw. die Elemente befahrbar und/oder begehbar ist bzw. sind. Eine solche Abdeckung dient insbesondere zum Abdecken eines Volumens und/oder eines Raums. Im Konkreten könnte die Abdeckung in Form einer Grubenabdeckung ausgebildet sein. Mindestens eines der Elemente könnte in Form eines Stegs ausgebildet sein.

So ist zunächst erkannt worden, dass bei einem Gitterboden mit einem Gittermuster von ca. 250 x 250 mm eine für den Schüttgutfluss wirksame offene Fläche von ca. 70% vorliegt. Wenn der Gitterboden ein Gittermuster von ca. 300 x 300 mm aufweist, liegt sogar eine offene Fläche von ca. 80% vor. Dennoch kommt es regelmäßig vor, dass ein auf einen solchen Gitterboden aufgegebenes Schüttgut diesen nicht passieren kann und eine Haufenbildung des Schüttguts die Folge ist. Erfindungsgemäß ist jedoch erkannt worden, dass beispielsweise in einer Ausführungsform einer erfindungsgemäßen Abdeckung eine offene Fläche von lediglich ca.-30% ausreicht. Wenn das Schüttgut auf die Elemente in Ruhelage aufgegeben wird, wird in der Regel ebenfalls eine Haufenbildung beobachtet. Sobald allerdings die Elemente in Bewegung versetzt werden, ist hierdurch ein stabiler bzw. stetiger und zumeist ausreichender Schüttgutfluss - trotz der relativ geringen offenen Fläche - möglich. Durch das Schwenken bzw. Bewegen der Elemente tritt eine mit dem Abstand von der Schwenkachse bzw. Bewegungsachse wachsende Vertikalbewegung der entsprechenden Teile der Elemente auf. Diese überträgt sich auf das unter Eigengewichtsdruck stehende Schüttgut und verursacht dort tektonische Bewegungen, die eventuelle Brückenbildungen des Schüttguts zerstören bzw. verhindern. Das Schüttgut wird zwangsweise mobilisiert. Nicht zuletzt deshalb kann mit der erfindungsgemäßen Abdeckung in vorteilhafter Weise ein vorgebbarer Schüttgutfluss erzielt werden. Durch die Dreh-, Schwenk- oder Pendelbewegung benachbarter Elemente wird das Schüttgut auch gequetscht bzw. geschnitten, was ebenfalls eine Förderung des Schüttguts bewirkt: Die hierdurch hervorgerufene Schüttgutförderung liefert im Allgemeinen einem geringeren Beitrag als die durch die Vertikalbewegungen hervorgerufene Schüttgutförderung.

Gemäß einer bevorzugten Ausführungsform weist die Bewegungseinheit mindestens einen Antrieb und mindestens ein Übertragungselement auf. Die Elemente sind von dem mindestens einen Antrieb über das mindestens eine Übertragungselement zu einer Dreh-, Schwenk- oder Pendelbewegung antreibbar. Als Antrieb könnte beispielsweise ein Elektromotor mit einer Antriebsleistung von ca. 2 kW dienen. Hiermit können Elemente mit einer Gesamtlänge vom 20 m angetrieben werden. Das entspricht einer erforderlichen Antriebsleistung von 1 kW pro 10 m Elementelänge. Die Zusammenwirkung zwischen den Elementen und dem Übertragungselement könnte derart ausgestaltet sein, dass die Dreh-, Schwenk- oder Pendelbewegung der Elemente einen Auslenkwinkel von bis zu +/- 20 Grad aufweist.

Besonders bevorzugt erfolgt die Bewegung der Elemente durch ein wiederholtes Auslenken bzw. Verschwenken der Elemente in eine Drehrichtung bis zu einem ersten Umkehrpunkt. Dann erfolgt ein Auslenken bzw. Verschwenken der Elemente in die entgegengesetzte Drehrichtung bis zu einem zweiten Umkehrpunkt. Dieser Vorgang wird wiederholt ausgeführt.

In einer besonders bevorzugten Ausführungsform werden die Elemente gleichsinnig bewegt. Dementsprechend werden alle Elemente zur gleichen Zeit in die gleiche Richtung ausgelenkt bzw. gedreht. Es ist auch denkbar, jeweils benachbarte Elemente gegensinnig zu bewegen, wobei beispielsweise alle geradzahligen Elemente in eine Richtung und alle ungeradzahligen Elemente in die hierzu entgegengesetzte Richtung - quasi gegenphasig - ausgelenkt werden, falls man sich die Elemente mit einer aufsteigenden Nummerierung denkt. Es kann auch vorteilhaft sein, für ein vorgebbares Zeitintervall sämtliche Elemente gleichsinnig zu bewegen und für ein weiter vorgebbares Zeitintervall jeweils benachbarte Elemente gegensinnig zu bewegen. Hierzu könnten zwei Übertragungsmittel vorgesehen sein, welche beispielsweise jeweils von einem Antrieb angetrieben werden könnten. Es könnte auch lediglich ein Antrieb und zwei Übertragungsmittel mit einem Getriebe und einer Kupplung vorgesehen sein, mit welchem die zwei Übertragungsmittel gleichphasig, gegenphasig oder lediglich ein Übertragungsmittel antreibbar sind.

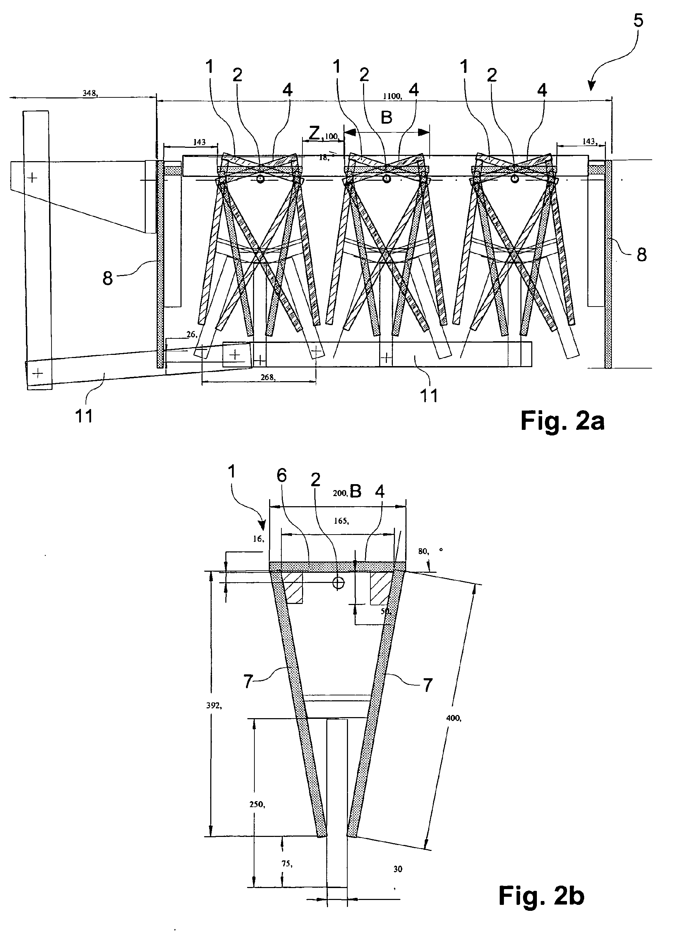

Die Elemente könnten einen T-förmigen, einen dreieckförmigen, einen trapezförmigen oder vieleckigen Querschnitt aufweisen. Von der Seitenkante eines T-förmigen Elements (Pendelstabs) könnte eine Quetschgefahr für Personen ausgehen. Daher ist diese Ausführungsform zumindest für einige Anwendungen auf Grund von Sicherheitsanforderungen an die Abdeckung weniger bevorzugt. Eine Vermeidung der kritischen Kante (wie z.B. in Fig. 2b gezeigt) beeinträchtigt in vorteilhafter Weise die Wirksamkeit des Pendelprinzips nicht. Dementsprechend können solche Elemente einen dreieckförmigen oder einen trapezförmigen Querschnitt aufweisen.

Bevorzugt sind die Elemente derart ausgebildet, dass sie hohen statischen und/oder dynamischen Lasteinträgen genügen, so dass sie von Fahrzeugen, Radladern, LKWs ganz und/oder teilweise überfahren werden können. Wenn die Abdeckung hinsichtlich der Lasteinträge derart auszulegen ist, dass LKWs die Abdeckung teilweise oder vollständig überfahren können, sollte eine solche Abdeckung jedenfalls einen Lasteintrag von bis zu 15 t je Element (z.B. eine LKW-Achse mit 10 t Last) aufnehmen können.

Gemäß einer vorteilhaften Ausführungsform weist ein Element eine Längsrichtung auf. Die Dreh- bzw. Schwenkachse eines Elements ist parallel zur Längsrichtung angeordnet. Vorzugsweise ist die Dreh- bzw. Schwenkachse innerhalb des Querschnitts eines Elements angeordnet. Gemäß dieser Ausführungsform ist also ein Element einzeln dreh- bzw. schwenkbar gelagert, beispielsweise mit einer an einem Endbereichen des Elements vorgesehenen und an dem Element befestigten Achse. Diese Achse könnte in einem Lager des Randbereichs drehbar gelagert sein.

Ganz besonders bevorzugt sind die Elemente derart ausgebildet, angeordnet und bewegbar, dass mindestens eine Längskante des dem Schüttgut zugewandte Oberflächenteils zumindest teilweise eine Vertikalbewegung ausführt, falls die Elemente bewegt werden. Es ist nämlich erkannt worden, dass mit solchen Vertikalbewegungen der Elemente tektonische Bewegungen im anlagemden Schüttgut verursacht werden können und hierdurch Brückenbildungen des Schüttguts zerstört oder verhindert werden können. Ein Vertikalfluss des Schüttguts ist somit erzielbar.

Gemäß einer Ausführungsform weist ein Element eine Oberfläche auf, welche dem Schüttgut zugewandt ist. Gemäß dieser Ausführungsform sind die Elemente derart am Randbereich gelagert, dass die Oberflächen der Elemente im Wesentlichen horizontal ausgerichtet sind, falls die Elemente sich in einem Ruhezustand befinden. Hierdurch ist die Abdeckung von Personen begehbar und kann von Fahrzeugen befahren werden.

Es könnte mindestens ein Begrenzungsmittel vorgesehen sein, mit welchem die Bewegung der Elemente begrenzbar ist. Hierzu könnte eine Begrenzung oder mechanische Anschläge und/oder eine Zwangsführung der Bewegung der Elemente durch mechanische-Mittel vorgesehen sein, welche die Bewegung - und insbesondere eine Pendelbewegung - der Elemente auf max. +/- 25 Grad - vorzugsweise zu +/- 18 Grad - begrenzt. Es könnte auch ein Arretieren der Elemente in der Ruhelage vorgesehen sein, um ein Auslenken einzelner Elemente zu verhindern, wenn beispielsweise ein LKW die Abdeckung überfährt.

Im Ruhezustand der Elemente könnte zwischen zwei benachbarten Elementen ein Zwischenraum vorgebbarer Breite vorgesehen sein, welche vorzugsweise einen Wert aufweist, der in einem Bereich zwischen 80 und 150 mm liegt. Die Spaltbreite beträgt vorzugsweise minimal 100, maximal 130 mm, und insbesondere 110 mm, was als Optimum zwischen Quetschgefahr und Fehltrittsrisiko angesehen wird. Auch hiervon abweichende Werte sind denkbar und hängen insbesondere von der durchschnittlichen Größe und Beschaffenheit des jeweils verwendeten Schüttguts ab, für welches die Abdeckung konzipiert wird.

Die dem abzudeckenden Raum abgewandte bzw. dem Schüttgut zugewandte Oberfläche der Elemente bzw. der obere Bereich der Elemente könnte eine Breite - quer zur Längsrichtung der Elemente - aufweisen, welche vorzugsweise einen Wert aufweist, der in einem Bereich zwischen 150 und 250 mm liegt. Die Breite weist bevorzugt einen Wert von 200 mm auf, was die Trittsicherheit gewährleistet. Im Konkreten könnten die Elemente eine Länge aufweisen, welche einen Wert aufweist, der in einem Bereich zwischen 3000 bis 7000 mm liegt.

Bevorzugt weist der Randbereich eine - insbesondere vertikal ausgerichtete - Seitenverkleidung auf, welche sich über eine Tiefe von mindestens 400 mm ab der dem Schüttgut zugewandten Oberfläche der Elemente erstreckt. Eine solche - ggf. geschlossene - Seitenverkleidung der Elemente bzw. der Pendelstäbe kann insbesondere zur Abschirmung menschlicher Gliedmaßen dienlich sein.

Bevorzugt weist die dem Schüttgut zugewandte Oberfläche der Elemente eine rutschhemmende Beschichtung oder mindestens ein rutschhemmendes Mittel auf, beispielsweise in Form eines an der Oberfläche vorgesehenen Tränenblechs oder einer entsprechenden Beschichtung. So wird beispielsweise der Materialfluss durch Profilierungen, Erhebungen bzw. Hindernisse auf der Elementoberseite nicht signifikant verringert. Im Konkreten könnten die Profilierungen eine Höhe von 10 mm und eine Breite von 40 mm aufweisen und in Form von Randleisten ausgeführt sein.

Es ist eine modulare Bauweise mehrerer Abdeckungen möglich. Zum Abdecken eines Raumes sind mindestens zwei Abdeckungen nebeneinander angeordnet, um so einen größeren Grubenbereich abdecken zu können. Hierdurch können in vorteilhafter Weise mehrere LKWs oder Bahnwagons nebeneinander und/oder gleichzeitig entladen werden. Situationsspezifisch könnten die Abdeckungen -getrennt angesteuert werden. So könnten die Elemente zweier nebeneinander angeordneter Abdeckungen synchron oder unabhängig voneinander bewegbar sein. Mehrere Abdeckungen könnten in einer oder mehreren nebeneinander angeordneten Linien bzw. Reihen angeordnet sein.

Zur Ansteuerung der bewegbaren Elemente bzw. der Bewegungseinheit ist gemäß einer bevorzugten Ausführungsform eine Steuereinrichtung vorgesehen. Die Steuereinrichtung könnte in Abhängigkeit des auf die Abdeckung aufgebrachten Schüttguts die Elemente derart angesteuert werden, dass das Schüttgut zeitoptimiert oder flussoptimiert die Abdeckung durchtritt oder dass ein vorgebbarer vertikaler Volumenfluss des die Abdeckung durchtretenden Schüttguts erzielbar ist. In der Steuereinrichtung könnten also unterschiedliche Programmabläufe bzw. Ansteuerungsabläufe abgespeichert und bei Bedarf abrufbar sein.

Bevorzugt wird die Fläche der Abdeckung bzw. die Breite der Zwischenräume zuwischen den Elementen derart bemessen bzw. dimensioniert, dass damit ein Durchsatz mit einem Vertikalfluss im Mittel von 1 m/min möglich bzw. sichergestellt ist. Falls beispielsweise der Schwenkwinkel der Elemente nur +/- 14 Grad beträgt, ist die Abdeckung während einer Bewegung der Elemente besser bzw. sicherer begehbar. Es ergibt sich ein ruhigerer Lauf und der Schüttgut-Durchsatz ist nicht gravierend geringer als bei einer Winkelbewegung von beispielsweise +/- 18 Grad. Der erzielte Vertikalfluss betrug in einem konkreten Ausführungsbeispiel 0,8 m/min. Daher könnte die Steuereinrichtung die Bewegung der Elemente derart ansteuern, dass ein vorgebbarervorzugsweise im Wesentlichen konstanter - Volumenstrom des Schüttguts die Abdeckung durchtritt.

Die Frequenz der Bewegung der Elemente könnte einen vorgebbaren Wert aufweisen. Dieser Wert könnte z.B. 1 Hz betragen bzw. könnte in-einem Bereich von 0,1 Hz bis 3 Hz liegen. Die Festlegung dieses Wertes könnte von der Art und der Beschaffenheit des zu verarbeitenden Schüttguts abhängen. In der Regel wird die Frequenz der Bewegung der Elemente einen konstanten Wert aufweisen, der während des Betriebs der Abdeckung unverändert bleibt. Dennoch könnte es von Vorteil sein, wenn die Frequenz der Bewegung der Elemente variierbar ist.

Bevorzugt ist ein Bedienelement vorgesehen, mit welchem die Bewegung der Elemente gestartet, gestoppt und/oder in mindestens zwei Betriebsmodi angesteuert werden kann. Das Bedienelement könnte in Form eines Fußschalters oder in Form einer - vorzugsweise mobilen - Fernbedienung ausgebildet sein.

Es könnte eine zwangsweise Erreichung der Planlage der Elemente bei Antriebsstopp durch steuerungstechnische Maßnahmen vorgesehen sein, wenn beispielsweise ein Anlagenbetreiber eine Not-Aus-Vorrichtung (z.B. am Bedienelement) betätigt. Hiernach werden die Elemente mit ihrer oberen Fläche horizontal ausgerichtet.

Als Schüttgut kommen insbesondere alle Arten von groben und inhomogenen Schüttgütern in Frage. Insbesondere kann es sich bei dem Schüttgut um Biomasse oder um Holzhackschnitzel handeln. Daher könnten die geometrischen und/oder sonstigen Eigenschaften der Abdeckung an Besonderheiten für die Verwendung der Abdeckung für Biomasse oder Holzhackschnitzel als Schüttgut angepasst sein.

Gemäß einer ganz besonders bevorzugten Ausführungsform sind die Elemente ebenerdig angeordnet. Dementsprechend ist der Randbereich und eine eventuell vorgesehene Seitenverkleidung unterhalb oder abschließend mit der Oberfläche des Bereichs um die Abdeckung anzuordnen. Eine ebenerdige Anordnung der Elemente ermöglicht in vorteilhafter Weise ein Überfahren der Abdeckung mit einem LKW oder einem Radlader. Die Abdeckung ist für Personen einfach zugänglich und kann von ihnen begangen werden.

In verfahrensmäßiger Hinsicht wird die eingangs genannte Aufgabe durch die Merkmale des Anspruchs 15 gelöst. Demgemäß ist ein Verfahren zum Betreiben einer Abdeckung, insbesondere zum Betreiben einer Grubenabdeckung, definiert. Die Abdeckung umfasst bewegbare Elemente, mindestens einen Randbereich und eine Bewegungseinheit. Die Elemente erstrecken sich zumindest bereichsweise über den abzudeckenden Raum und sind im Wesentlichen parallel zueinander angeordnet. Die Elemente sind jeweils dreh- und/oder schwenkbar relativ zum Randbereich gelagert und von der Bewegungseinheit bewegbar. Die Elemente sind derart dimensioniert und relativ zueinander angeordnet, dass die Abdeckung befahrbar und/oder begehbar ist. Auf die Abdeckung wird Schüttgut aufgegeben und zum Austragen bzw. Durchtreten des Schüttguts durch die Abdeckung werden die Elemente in Bewegung versetzt.

Das erfindungsgemäße Verfahren ist insbesondere zum Betreiben einer Abdeckung gemäß einem der Ansprüche 1 bis 14 geeignet, so dass zur Vermeidung von Wiederholungen hinsichtlich der diesbezüglichen Vorrichtungsmerkmale auf den vorangegangenen Teil der Beschreibung verwiesen wird. Hierbei erschließen sich die zum Betreiben der Abdeckung erforderlichen Verfahrensschritte einem auf dem vorliegenden Gebiet tätigen Fachmann in Kenntnis des Offenbarungsgehalts des vorangegangenen Teils der Beschreibung.

Insbesondere durch geeignetes Einstellen des Schwenkwinkels und/oder der Bewegungsfrequenz der Elemente kann ein vorgebbarer bzw. gewünschter Schüttgutfluss erreicht werden. Diese könnten während des Betriebs auch variiert werden.

Üblicherweise erfolgt ein Abladevorgang eines mit Schüttgut beladenen LKWs in folgender Weise:
1. Vermessung oder Abschätzen des Anliefervolumens
2. Zuordnung einer mit einer erfindungsgemäßen Abdeckung abgedeckten Entladegosse (z.B. Nr. 3)
3. Überfahren der Abdeckung Nr. 3 bis zu -1 m, wobei die Elemente sich in Ruhestellung befinden
4. -Öffnen der Hecktüren des LKWs ca. 1 m in der Abdeckung
5. Start der LKW-Schubboden-Entladung am LKW
6. Start der Pendelbewegung per Fußschalter
7. Die Dauer dieser Arbeitsphase beträgt ca. 10 min.
8. Stopp der Pendelbewegung per Fußschalter
9. Aufräum- und Kehrtätigkeit an LKW und Abdeckung
10. Abfahrt des LKWs.

Zusammenfassend sind einige Vorteile der erfindungsgemäßen Abdeckung im Folgenden aufgeführt:
- es ist eine flurgleiche Anordnung der Abdeckung möglich,
- eine LKW-Überfahrt ist in Plan- bzw. Ruhelage der Elemente möglich,
- die Abdeckung kann in Plan- bzw. Ruhelage von Personen begangen werden, wobei beispielsweise Fahrzeugtüren geöffnet oder geschlossen werden können oder die Abdeckung gereinigt werden kann,
- es ist eine Höhengleichheit der Staboberkante zum Rand in Planlage möglich,
- es kann eine extern betätigte Aktivierung der Bewegung der Elemente vorgesehen sein, beispielsweise per Fuß-Fernbedienung.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen
- Fig. 1a: eine schematische Darstellung einzelner Elemente einer Abdeckung eines ersten erfindungsgemäßen Ausführungsbeispiels, wobei die Elemente sich in einer ersten Winkelstellung befinden,
- Fig. 1b: die Elemente aus Fig. 1a in einer zweiten Winkelstellung,
- Fig. 1c: die Elemente aus Fig. 1a in einer dritten Winkelstellung,
- Fig. 1d: die Elemente aus Fig. 1a in einer Ruhestellung,
- Fig. 2a: eine schematische Darstellung in einer Schnittansicht eines zweiten Ausführungsbeispiels einer erfindungsgemäßen Abdeckung,
- Fig. 2b: in einer detaillierten Schnittansicht ein Element des Ausführungsbeispiels gemäß Fig. 2a,
- Fig. 3: eine schematische Darstellung mehrerer nebeneinander angeordneter erfindungsgemäßer Abdeckungen,
- Fig. 4a: eine schematische Darstellung in einer Schnittansicht eines dritten erfindungsgemäßen Ausführungsbeispiels einer Abdeckung und
- Fig. 4b: eine Aufsicht auf die Abdeckung gemäß Fig. 4a.

In den Figuren sind gleiche oder ähnliche Bauteile mit denselben Bezugszeichen gekennzeichnet.

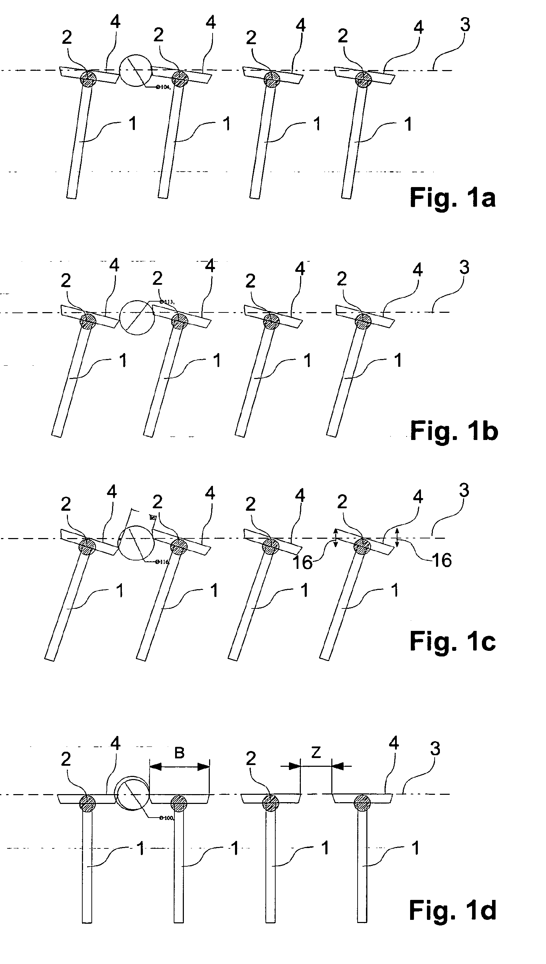

Fig. 1a zeigt einzelne Elemente 1 einer Abdeckung eines ersten erfindungsgemäßen Ausführungsbeispiels in einer Schnittansicht. Die Elemente 1 befinden sich in einer ersten Winkelstellung. Die Elemente 1 weisen einen T-förmigen Querschnitt auf. Mit dem Bezugszeichen 2 ist die Dreh- bzw. Schwenkachse des Elements 1 gezeigt, welche senkrecht zur Zeichenebene verläuft. Die Elemente 1 gemäß Fig. 1a sind allesamt in die gleiche Richtung, d.h. gleichsinnig bzw. gleichphasig, ausgelenkt und zwar um einen ersten Winkel relativ zur Horizontalen, welche mit dem Bezugszeichen 3 gekennzeichnet ist. Auf gleicher Höhe zu dem in den Figuren 1a bis 1d eingezeichneten Horizontalen 3 erstreckt sich die Oberfläche des Bereichs um die Abdeckung, wodurch eine ebenerdige Anordnung der Elemente 1 vorliegt. In Fig. 1b sind die Elemente 1 um einen größeren Winkel relativ zur Horizontalen 3 und in Figur 1c schließlich um einen vorgebbaren maximalen Winkel zur Horizontalen 3 ausgelenkt. Schließlich sind die Elemente 1 in Fig. 1d in einer Ruhelage bzw. Ruhestellung gezeigt, in welcher die Oberfläche 4 der Elemente parallel zur Horizontalen 3 ausgerichtet ist.

Fig. 2a zeigt eine schematische Darstellung in einer Schnittansicht eines zweiten Ausführungsbeispiels einer erfindungsgemäßen Abdeckung 5. Bei der Abdeckung 5 sind lediglich drei Elemente 1 nebeneinander angeordnet. Zwei benachbarte Elemente 1 weisen hierbei einen Abstand Z von 100 mm auf. Die Elemente 1 sind in Fig. 2a in drei unterschiedlichen Schwenkpositionen gezeigt, nämlich in 0 Grad, in 18 Grad nach links und in 18 Grad nach rechts ausgelenkt. Die unterschiedlichen Schwenkpositionen der Elemente 1 sind mit unterschiedlichen Schraffuren angedeutet.

Das in Fig. 2b vergrößert in einer Schnittansicht gezeigte Element 1 weist eine im Wesentlichen plattenförmige Konstruktion auf. Sowohl das die Oberfläche 4 bildende Oberteil 6 als auch die beiden Seitenplatten 7 können aus Metallplatten gebildet sein, welche zur Herstellung aneinander geschweißt oder entsprechend gebogen werden können. Die Oberfläche weist eine Breite B von 200 mm auf. Die in Fig. 2a gezeigte Abdeckung erstreckt sich lediglich über einen Bereich von 1100 mm. Rechts davon ist eine weitere Abdeckung (nicht gezeigt) vorgesehen, welche zusammen mit der in Fig. 2a gezeigten Abdeckung 5 einen darunter liegenden Raum abdeckt. Mit dem Bezugszeichen 8 ist ein Teil des Randbereichs bzw. einer Seitenverkleidung der Abdeckung 5 gekennzeichnet, nämlich der Teil, der von der Schnittansicht erfasst ist. Der an den Stirnenden vorgesehene Randbereich (in Fig. 2a nicht gezeigt) weist entsprechende Lagerstelle auf, mit welchen die Elemente 1 jeweils um die Drehachsen 2 drehbar gelagert sind. Auch dort ist eine Seitenverkleidung vorgesehen.

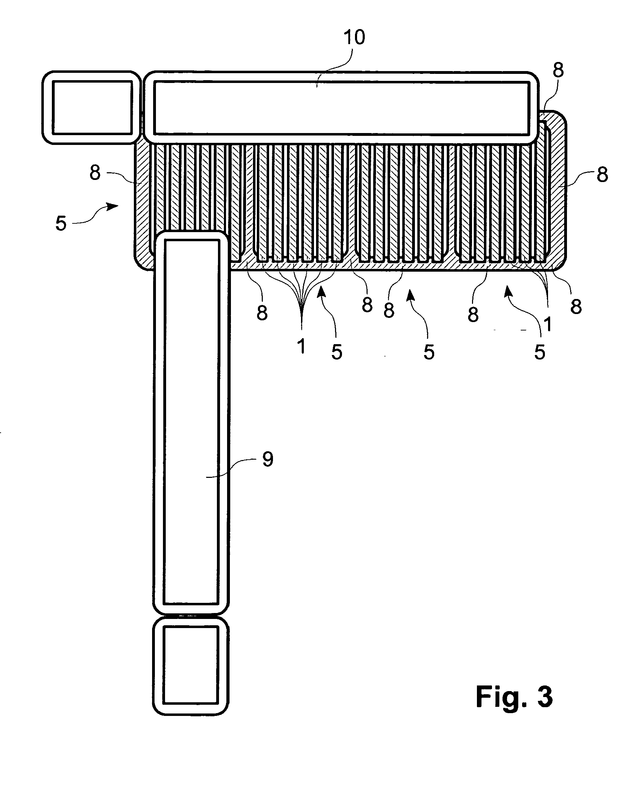

Fig. 3 zeigt in einer schematischen Aufsicht vier nebeneinander angeordneter Abdeckungen 5, wobei der Randbereich einer jeden Abdeckung 5 ebenfalls mit dem Bezugszeichen 8 gekennzeichnet ist. Ein LKW 9 steht mit seinem Heck an der linken Abdeckung 5 und wird heckseitig das Schüttgut auf die Elemente 1 der linken Abdeckung 5 abladen. Diese werden hierbei in Bewegung versetzt, so dass ein möglichst volumenmaximierter Schüttgutfluss in die unter der Abdeckung 5 vorgesehene (nicht gezeigte) Aufnahme-Gosse fallen bzw. verbracht werden kann. Der LKW 10 (es könnte auch ein Bahnwaggon sein) steht mit seiner linken Seite quer zu den vier Abdeckungen 5. Der LKW 10 wird das Schüttgut seitlich abladen. Fig. 3 ist entnehmbar, dass der LKW 10 die Abdeckungen 5 mit den linken Rädern befahren hat. Dementsprechend weisen die Abdeckungen 5 und insbesondere die Elemente 1 eine ausreichende Stabilität hierzu auf. Mit anderen Worten sind die Elemente 1 sowie deren Lagerungen am Randbereich 8 derart ausgebildet, dass sie solchen hohen statischen und dynamischen Lasteinträgen genügen.

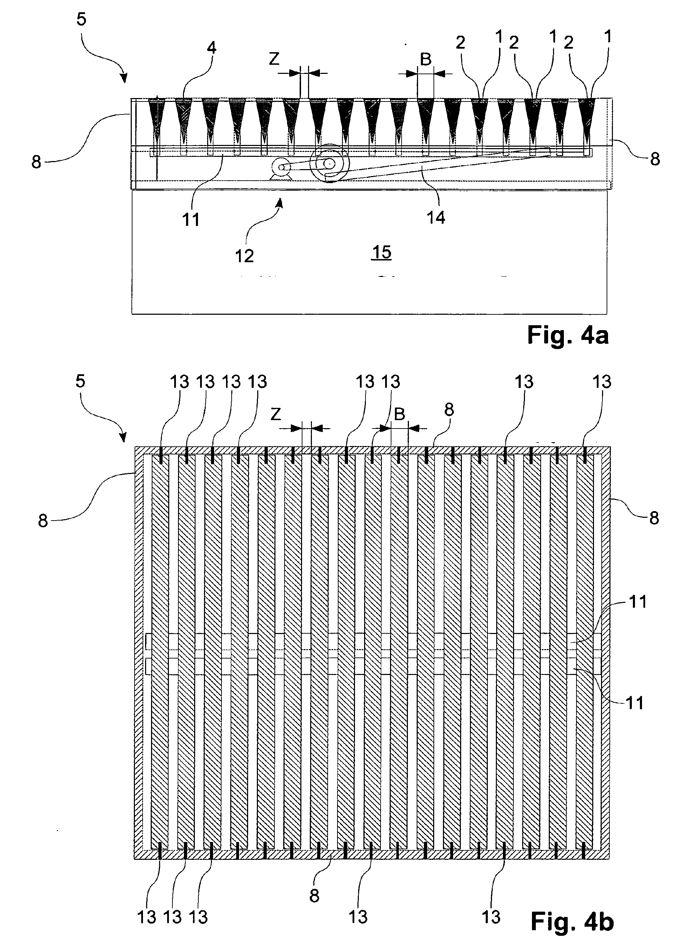

Fig. 4a zeigt in einer Schnittansicht eine schematische Darstellung eines dritten Ausführungsbeispiels einer erfindungsgemäßen Abdeckung 5. Die siebzehn Elemente 1 sind in diesem Ausführungsbeispiel im Wesentlichen dreieckförmig ausgebildet. Die Elemente 1 werden mit Hilfe eines Übertragungsmittels 11 (nämlich eine Strebe, an welcher die Elemente 1 an ihrem unteren Bereich jeweils drehbar befestigt sind) von der Bewegungseinheit 12, welche einen Elektromotor und ein Übersetzungsgetriebe aufweist, über eine Strebe 14 angetrieben bzw. bewegt. Die Abdeckung 5 gemäß Fig. 4a erstreckt sich über eine Länge von ca. 5600 mm in diesem Ausführungsbeispiel. Unterhalb der Abdeckung 5 ist eine Aufnahme-Gosse bzw. eine Grube 15 vorgesehen, in welche das auf der Abdeckung aufgegebene Schüttgut (nicht gezeigt) herabfällt, wenn die Elemente 1 der Abdeckung 5 bewegt werden. Das in der Grube 15 befindliche Schüttgut wird dann mit einer nicht gezeigten Förderspirale zu seinem Bestimmungsort transportiert.

Fig. 4b zeigt die Abdeckung 5 aus Fig. 4a in einer Aufsicht. Es ist erkennbar, dass der Randbereich 8 sich rechteckig bzw. rahmenförmig um die Elemente 1 erstreckt. Lediglich schematisch ist angedeutet, dass die Elemente 1 jeweils an gegenüberliegenden Enden an den Lagerstellen 13 jeweils an den gegenüberliegenden Randbereichen 8 drehbar gelagert sind. Die Abdeckung 5 gemäß Fig. 4a weist eine Breite von 5000 mm auf.

In Fig. 1c ist gezeigt, dass die äußeren Längskanten der Elemente 1 bei den Schwenkbewegungen Vertikalbewegungen ausführen. Diese Vertikalbewegung ist mit den Pfeilen 16 angedeutet. Die Vertikalbewegungen sind umso größer, je größer der Schwenkwinkel der Elemente 1 ist.

## Patentansprüche

1. Abdeckung (5) zum Abdecken eines Volumens und/oder eines Raums (15), insbesondere eine Grubenabdeckung, wobei die Abdeckung (5) bewegbare Elemente (1), mindestens einen Randbereich (8) und eine Bewegungseinheit (12) aufweist, wobei die Elemente (1) sich zumindest bereichsweise über den abzudeckenden Raum (15) erstrecken und im Wesentlichen parallel zueinander angeordnet sind, wobei die Elemente (1) jeweils dreh- und/oder schwenkbar relativ zum Randbereich (8) gelagert und von der Bewegungseinheit (12) bewegbar sind, wobei die Elemente (1) Oberflächen (4) und einen Ruhezustand aufweisen und wobei zum Begehen und/oder zum Befahren der Abdeckung die, Oberflächen der Elemente (1) im Ruhezustand im Wesentlichen horizontal ausgerichtet sind, wobei die Elemente (1) derart dimensioniert und relativ zueinander angeordnet sind, dass die Elemente (1) befahrbar und/oder begehbar sind, **dadurch gekennzeichnet, dass** die Elemente (1) einen T-förmigen, einen dreieckförmigen, einen trapezförmigen oder einen vieleckigen Querschnitt aufweisen, dass die Bewegungseinheit (12) einen Antrieb und ein Übertragungselement (11) aufweist, dass die Elemente (1) von dem Antrieb über das Übertragungselement zum Bewirken einer Schüttgutförderung zu einer Dreh-, Schwenk- oder Pendelbewegung mit einstellbarer Frequenz antreibbar sind, welche vorzugsweise einen Auslenkwinkel von bis zu +/- 20 Grad aufweist.

2. Abdeckung nach Anspruch 1, **dadurch gekennzeichnet, dass** die Elemente (1) derart von der Bewegungseinheit (12) bewegbar sind, dass die Elemente (1) eine gleichsinnige oder dass benachbarte Elemente (1) jeweils eine gegensinnige Bewegung ausführen.

3. Abdeckung nach Anspruch 1 oder 2, **dadurch gekennzeichnet, dass** die Elemente (1) derart ausgebildet und/oder gelagert sind, dass sie hohen statischen und/oder dynamischen Lasteinträgen genügen und dass beispielsweise ein Element einen Lasteintrag von bis zu 15 t aufnehmen kann.

4. Abdeckung nach einem der Ansprüche 1 bis 3, **dadurch gekennzeichnet, dass** ein Element (1) eine Längsrichtung aufweist, dass die Dreh- bzw. Schwenkachse eines Elements (1) parallel zur Längsrichtung angeordnet ist und dass vorzugsweise die Dreh- bzw. Schwenkachse innerhalb des Querschnitts eines Elements (1) angeordnet ist und/oder dass der Randbereich eine - vorzugsweise vertikal ausgerichtete - Seitenverkleidung (8) aufweist, welche sich über eine Tiefe von mindestens 400 mm ab der dem Schüttgut zugewandten Oberfläche der Elemente (1) erstreckt.

5. Abdeckung nach einem der Ansprüche 1 bis 4, **dadurch gekennzeichnet, dass** die Elemente (1) derart ausgebildet, angeordnet und bewegbar sind, dass mindestens eine Längskante des dem Schüttgut zugewandte Oberflächenteils zumindest teilweise eine Vertikalbewegung (16) ausführt, falls die Elemente (1) bewegt werden.

6. Abdeckung nach einem der Ansprüche 1 bis 5, **dadurch gekennzeichnet, dass** mindestens ein Arretierungsmittel vorgesehen ist, mit welchem die Elemente (1) in einer Ruhestellung arretierbar sind und/oder dass mindestens ein Begrenzungsmittel vorgesehen ist, mit welchem die Bewegung der Elemente (1) begrenzbar ist.

7. Abdeckung nach einem der Ansprüche 1 bis 6, **dadurch gekennzeichnet, dass** im Ruhezustand der Elemente (1) zwischen zwei benachbarten Elementen (1) ein Zwischenraum (Z) vorgebbarer Breite vorgesehen ist, welche vorzugsweise einen Wert aufweist, der in einem Bereich zwischen 80 und 150 mm liegt.

8. Abdeckung nach einem der Ansprüche 1 bis 7, **dadurch gekennzeichnet, dass** die dem abzudeckenden Raum (15) abgewandte Oberfläche der Elemente (1) eine Breite (B) aufweist, welche vorzugsweise einen Wert aufweist, der in einem Bereich zwischen 150 und 250 mm liegt und/oder dass die Elemente (1) eine Länge aufweisen, welche einen Wert aufweist, der in einem Bereich zwischen 3000 bis 7000 mm liegt.

9. Abdeckung nach einem der Ansprüche 1 bis 8, **dadurch gekennzeichnet, dass** die dem Schüttgut zugewandte Oberfläche der Elemente (1) eine rutschhemmende Beschichtung oder mindestens ein rutschhemmendes Mittel aufweist.

10. Abdeckung nach einem der Ansprüche 1 bis 9, **dadurch gekennzeichnet, dass** zum Abdecken eines Raumes (15) mindestens zwei Abdeckungen (5) nebeneinander angeordnet sind, wobei vorzugsweise die Elemente (1) zweier nebeneinander angeordneter Abdeckungen (5) synchron oder unabhängig voneinander bewegbar sind.

11. Abdeckung nach einem der Ansprüche 1 bis 10, **dadurch gekennzeichnet, dass** eine Steuereinrichtung vorgesehen ist, welche die Bewegung der Elemente (1) steuert und wobei die Steuereinrichtung vorzugsweise in Abhängigkeit des auf die Abdeckung aufgebrachten Schüttguts die Elemente (1) derart ansteuert, dass das Schüttgut zeitoptimiert oder flussoptimiert die Abdeckung durchtritt oder dass ein vorgebbarer vertikaler Volumenfluss des die Abdeckung durchtretenden Schüttguts erzielbar ist und dass die Steuereinrichtung die Bewegung der Elemente (1) derart steuern könnte, dass ein vorgebbarer - vorzugsweise im Wesentlichen konstanter - Volumenstrom des Schüttguts die Abdeckung durchtritt.

12. Abdeckung nach einem der Ansprüche 1 bis 11, **dadurch gekennzeichnet, dass** die Frequenz der Bewegung der Elemente (1) einen vorgebbaren Wert aufweist, welcher in einem Bereich zwischen 0,1 Hz und 3 Hz liegt und vorzugsweise 1 Hz beträgt und/oder dass die Frequenz der Bewegung der Elemente (1) variierbar ist.

13. Abdeckung nach einem der Ansprüche 1 bis 12, **dadurch gekennzeichnet, dass** ein Bedienelement vorgesehen ist, mit welchem die Bewegung der Elemente (1) gestartet, gestoppt und/oder in mindestens zwei Betriebsmodi angesteuert werden kann und wobei das Bedienelement in Form eines Fußschalters oder in Form einer (mobilen) Fernbedienung ausgebildet sein könnte.

14. Abdeckung nach einem der Ansprüche 1 bis 13, **dadurch gekennzeichnet, dass** die geometrischen und/oder sonstigen Eigenschaften der Abdeckung an Besonderheiten für die Verwendung der Abdeckung für Biomasse oder Holzhackschnitzel als Schüttgut angepasst ist und/oder dass die Elemente (1) ebenerdig angeordnet sind.

15. Verfahren zum Betreiben einer Abdeckung (5) oder einer Grubenabdeckung, insbesondere zum Betreiben einer Abdeckung (5) nach einem der Ansprüche 1 bis 14, wobei die Abdeckung (5) bewegbare Elemente (1), mindestens einen Randbereich (8) und eine Bewegungseinheit (12) aufweist, wobei die Elemente (1) sich zumindest bereichsweise über den abzudeckenden Raum (15) erstrecken und im Wesentlichen parallel zueinander angeordnet sind, wobei die Elemente (1) jeweils dreh- und/oder schwenkbar relativ zum Randbereich (8) gelagert und von der Bewegungseinheit (12) bewegbar sind, wobei die Elemente (1) Oberflächen (4) und einen Ruhezustand aufweisen und wobei zum Begehen und/oder zum Befahren der Abdeckung die Oberflächen der Elemente (1) im Ruhezustand im Wesentlichen horizontal ausgerichtet sind, und die Elemente (1) derart dimensioniert und relativ zueinander angeordnet sind, dass die Elemente (1) befahrbar und/oder begehbar sind, **dadurch gekennzeichnet, dass** auf die Abdeckung (5) Schüttgut aufgegeben wird und zum Austragen bzw. Durchtreten des Schüttguts durch die Abdeckung (5) die Elemente (1) in eine mit einstellbarer Frequenz Bewegung versetzt werden.

## Claims

1. Covering (5) for covering a volume and/or a space (15), in particular a pit covering, where the covering (5) having moveable elements (1), at least one marginal region (8) and a movement unit (12), where the elements (1) extending, at least in regions, over the space (15) to be covered and being arranged essentially parallel to one another, where the elements (1) being in each case mounted rotatably and/or pivotably in relation to the marginal region (8) and being moveable by the movement unit (12), where the elements (1) having surfaces (4) and a state of rest, and where for walking and/or driving on the covering (5) the surfaces of the elements (1) being oriented essentially horizontally in the state of rest, where the elements (1) being dimensioned and arranged in relation to one another such that the elements (1) have a drive-on and/or walk-on capability, **characterized in that** the elements (1) having a T-shaped, triangular, trapezoidal or polygonal cross section, **in that** the movement unit (12) having a drive and a transmission element (11), **in that** the elements (1) being drivable by the drive via the transmission element in a rotational, pivoting or pendulum movement with a settable frequency, which preferably has a deflection angle of up to +/- 20 degrees.

2. Covering according to claim 1, **characterized in that** the elements (1) being moveable by the movement unit (12) in such a way that the elements (1) execute in each case a codirectional movement or in such a way that adjacent elements (1) execute in each case a contradirectional movement.

3. Covering according to claim 1 or 2, **characterized in that** the elements (1) being designed and/or mounted in such a way that they withstand the introduction of high static and/or dynamic loads and **in that**, for example, an element can absorb an introduction of load of up to 15t.

4. Covering according to one of the claims 1 to 3, **characterized in that** an element (1) having a longitudinal direction, the axis of rotation or pivot axis of an element (1) being arranged parallel to the longitudinal direction, and **in that** preferably the axis of rotation or pivot axis being arranged within the cross section of an element (1) and/or **in that** the marginal region having a - preferably vertically oriented - side cladding (8) which extends over a depth of at least 400 mm from the surface of the elements (1) which faces the bulk material.

5. Covering according to one of the claims 1 to 4, **characterized in that** the elements (1) being designed, arranged and moveable in such a way that at least one longitudinal edge of the surface part facing the bulk material executes at least partially a vertical movement (16) if the elements (1) are moved.

6. Covering according to one of the claims 1 to 5, **characterized in that** at least one retention means being provided by which the elements (1) can be retained in a position of rest and/or **in that** at least one limitation means being provided by which the movement of the elements (1) can be limited.

7. Covering according to one of the claims 1 to 6, **characterized in that** in the state of rest of the elements (1), between two adjacent elements (1), an interspace (Z) of predetermineable width which preferably has a value which lies in a range of between 80 and 150 mm is provided.

8. Covering according to one of the claims 1 to 7, **characterized in that** the surface of the elements (1) which faces away from the space (15) to be covered having a width (B) which preferably has a value which lies in a range of between 150 and 250 mm and/or **in that** the elements (1) having a length which has a value which lies in a range of between 3000 and 7000 mm.

9. Covering according to one of the claims 1 to 8, **characterized in that** the surface of the elements (1) which faces the bulk material having a slip-inhibiting coating or at least one slip-inhibiting means.

10. Covering according to one of the claims 1 to 9, **characterized in that** at least two coverings (5) being arranged next to one another in order to cover a space (15), wherein preferably the elements (1) of two coverings (5) arranged next to one another being moveable synchronously or independently of one another.

11. Covering according to one of the claims 1 to 10, **characterized in that** a control device being provided which controls the movement of the elements (1) and where the control device preferably controls the elements (1) as a function of the bulk material applied to the covering, in such a way that the bulk material passes through the covering in a time-optimized or flow-optimized manner or in such a way that a predeterminable vertical volume flow of the bulk material passing through the covering can be achieved and **in that** the control device could control the movement of the elements (1) in such a way that a predeterminable - preferably essentially constant - volume flow of the bulk material passes through the covering.

12. Covering according to one of the claims 1 to 11, **characterized in that** the frequency of movement of the elements (1) having a predeterminable value which lies in a range of between 0.1 Hz and 3 Hz and preferably amounts to 1 Hz and/or **in that** the frequency of movement of the elements (1) being variable.

13. Covering according to one of the claims 1 to 12, **characterized in that** an operating element being provided, by means of which the movement of the elements (1) can be started, stopped and/or controlled in at least two operating modes and where the operating element could be designed in the form of a footswitch or in the form of a (mobile) remote control.

14. Covering according to one of the claims 1 to 13, **characterized in that** the geometric and/or other properties of the covering being adapted to special features for the use of the covering for biomass or wood chips as bulk material and/or **in that** the elements (1) being arranged level with the ground.

15. Method for operating a covering (5) or a pit covering, especially for operating a covering (5) according to one of the claims 1 to 14, where the covering (5) having moveable elements (1), at least one marginal region (8) and a movement unit (12), where the elements (1) extending, at least in regions, over the space (15) to be covered and being arranged essentially parallel to one another, where the elements (1) being in each case mounted rotatably and/or pivotably in relation to the marginal region (8) and being moveable by the movement unit (12), where the elements (1) having surfaces (4) and a state of rest, and where for walking and/or driving on the covering the surfaces of the elements (1) being oriented essentially horizontally in the state of rest, and the elements (1) being dimensioned and arranged in relation to one another in such a way that the elements (1) have a drive-on and/or walk-on capability, **characterized in that** bulk material being transferred onto the covering (5), and, for the discharge or passage of the bulk material through the covering (5), the elements (1) being set in motion with a settable frequency.

## Revendications

1. Recouvrement (5) pour recouvrir un volume et/ou un espace (15), notamment un recouvrement de fosse, le recouvrement (5) comportant des éléments (1) mobiles, au moins une zone de bordure (8) et une unité de déplacement (12), les éléments (1) s'étendant au moins dans certaines zones au-dessus de l'espace (15) à recouvrir et étant disposés pour l'essentiel parallèlement les uns par rapport aux autres, les éléments (1) étant disposés respectivement de façon à pouvoir pivoter et/ou de façon à pouvoir basculer par rapport à la zone de bordure (8) et pouvant être déplacés par l'unité de déplacement (12), les éléments (1) comportant des surfaces (4) et un état de repos et les surfaces des éléments (1) étant orientées à l'état de repos pour l'essentiel horizontalement pour permettre de marcher et/ou de rouler sur le recouvrement, les éléments (1) étant dimensionnés et disposés de telle sorte les uns par rapport aux autres qu'il est possible de marcher et/ou de rouler sur les éléments (1), **caractérisé en ce que** les éléments (1) comportent une section transversale en forme de T, de triangle, de trapèze ou de polygone, que l'unité de déplacement (12) comporte un entraînement et un élément de transmission (11), que les éléments (1) puissent être entraînés par l'entraînement via l'élément de transmission pour provoquer une extraction de biens en vrac par le biais d'un mouvement de pivotement, de basculement ou de pendule à fréquence réglable, comportant de préférence un angle de déviation pouvant atteindre +/- 20 degrés.

2. Recouvrement selon la revendication 1, **caractérisé en ce que** les éléments (1) peuvent être déplacés de telle sorte par l'unité de déplacement (12) que les éléments (1) réalisent un mouvement de même sens ou que des éléments (1) connexes réalisent respectivement un mouvement opposé.

3. Recouvrement selon la revendication 1 ou 2, **caractérisé en ce que** les éléments (1) sont réalisés et/ou disposés de telle sorte qu'ils correspondent à des valeurs de charge statiques et/ou dynamiques élevées et qu'un élément peut par exemple absorber une valeur de charge pouvant atteindre 15 t.

4. Recouvrement selon l'une quelconque des revendications 1 à 3, **caractérisé en ce qu'**un élément (1) présente une direction longitudinale, que l'axe de pivotement et/ou de basculement d'un élément (1) est disposé parallèlement à la direction longitudinale et que l'axe de pivotement et/ou de basculement est de préférence disposé à l'intérieur de la section transversale d'un élément (1) et/ou que la zone de bordure comporte un revêtement latéral (8) - de préférence orienté verticalement - qui s'étend sur une profondeur d'au moins 400 mm à partir de la surface des éléments (1) orientée vers les biens en vrac.

5. Recouvrement selon l'une quelconque des revendications 1 à 4, **caractérisé en ce que** les éléments (1) sont réalisés, disposés et déplaçables de telle sorte qu'au moins un bord longitudinal de la partie de surface orientée vers les biens en vrac réalise au moins en partie un mouvement vertical (16) si les éléments (1) sont déplacés.

6. Recouvrement selon l'une quelconque des revendications 1 à 5, **caractérisé en ce qu'**au moins un moyen de blocage est prévu permettant de bloquer les éléments (1) dans une position de repos et/ou qu'au moins un moyen de limitation est prévu permettant de limiter le mouvement des éléments (1).

7. Recouvrement selon l'une quelconque des revendications 1 à 6, **caractérisé en ce que** dans l'état de repos des éléments (1), un espace intermédiaire (Z) de largeur prédéfinie est prévu entre deux éléments (1) connexes, ledit espace présentant de préférence une valeur située dans une plage comprise entre 80 et 150 mm.

8. Recouvrement selon l'une quelconque des revendications 1 à 7, **caractérisé en ce que** la surface des éléments (1) opposée à l'espace (15) à recouvrir comporte une largeur (B) présentant de préférence une valeur située dans une plage comprise entre 150 et 250 mm et/ou que les éléments (1) présentent une longueur présentant une valeur située dans une plage comprise entre 3000 et 7000 mm.

9. Recouvrement selon l'une quelconque des revendications 1 à 8, **caractérisé en ce que** la surface des éléments (1) orientée vers les biens en vrac comporte un revêtement antidérapant ou au moins un moyen antidérapant.

10. Recouvrement selon l'une quelconque des revendications 1 à 9, **caractérisé en ce qu'**au moins deux recouvrements (5) sont disposés côte à côte pour recouvrir un espace (15), les éléments (1) des deux recouvrements (5) disposés côte à côte pouvant de préférence être déplacés de façon synchrone ou indépendamment l'un de l'autre.

11. Recouvrement selon l'une quelconque des revendications 1 à 10, **caractérisé en ce qu'**un dispositif de commande est prévu lequel commande le déplacement des éléments (1) et le dispositif de commande dirigeant de préférence les éléments (1) en fonction des biens en vrac amenés sur le recouvrement de telle sorte que les biens en vrac traversent le recouvrement de façon optimisée dans le temps ou par rapport au débit ou qu'un débit volumique vertical prédéfini des biens en vrac traversant le recouvrement puisse être atteint et que le dispositif de commande permet de commander de telle sorte le déplacement des éléments (1) qu'un débit volumique prédéfini - de préférence pour l'essentiel constant - des biens en vrac traverse le recouvrement.

12. Recouvrement selon l'une quelconque des revendications 1 à 11, **caractérisé en ce que** la fréquence du mouvement des éléments (1) présente une valeur prédéfinie située dans une plage comprise entre 0,1 Hz et 3 Hz et est de préférence de 1 Hz et/ou que la fréquence du déplacement des éléments (1) peut varier.

13. Recouvrement selon l'une quelconque des revendications 1 à 12, **caractérisé en ce qu'**un élément de commande est prévu lequel permet de démarrer, d'arrêter et/ou de commander le déplacement des éléments (1) dans au moins deux modes de fonctionnement et l'élément de commande pouvant prendre la forme d'un contacteur de pied ou d'une télécommande (mobile).

14. Recouvrement selon l'une quelconque des revendications 1 à 13, **caractérisé en ce que** les propriétés géométriques et/ou autres du recouvrement sont adaptées aux particularités liées à l'utilisation du recouvrement de biomasse ou de granulés de bois sous la forme de biens en vrac et/ou que les éléments (1) sont disposés au niveau du sol.

15. Procédé d'exploitation d'un recouvrement (5) ou d'un recouvrement de fosse, notamment pour exploiter un recouvrement (5) selon l'une quelconque des revendications 1 à 14, le recouvrement (5) comportant des éléments (1) mobiles, au moins une zone de bordure (8) et une unité de déplacement (12), les éléments (1) s'étendant au moins dans certaines zones au-dessus de l'espace (15) à recouvrir et étant disposés pour l'essentiel parallèlement les uns par rapport aux autres, les éléments (1) étant disposés respectivement de façon à pouvoir pivoter et/ou de façon à pouvoir basculer par rapport à la zone de bordure (8) et pouvant être déplacés par l'unité de déplacement (12), les éléments (1) comportant des surfaces (4) et un état de repos et les surfaces des éléments (1) étant orientées à l'état de repos pour l'essentiel horizontalement pour permettre de marcher et/ou de rouler sur le recouvrement, les éléments (1) étant dimensionnés et disposés de telle sorte les uns par rapport aux autres qu'il est possible de marcher et/ou de rouler sur les éléments (1), **caractérisé en ce que** des biens en vrac sont posés sur le recouvrement (5) et que les éléments (1) sont déplacés de façon décalée les uns par rapport aux pour permettre de distribuer et/ou de faire passer les biens en vrac à travers le recouvrement (5).
